# EUROPÄISCHE PATENTSCHRIFT

(11) **EP 3 311 113 B1**
(45) Veröffentlichungstag und Bekanntmachung des Hinweises auf die Patenterteilung: **05.08.2020**
(21) Anmeldenummer: 16728690.5
(22) Anmeldetag: 13.06.2016
(51) Int. Cl.: G01D 3/08, G01D 18/00

(54) **STEUERSCHALTUNG UND VERFAHREN ZUM QUALIFIZIEREN EINES FEHLERS FÜR EINE SYNCHRONMASCHINE**
CONTROL CIRCUIT AND METHOD FOR QUALIFYING A FAULT FOR A SYNCHRONOUS MACHINE
CIRCUIT DE COMMANDE ET PROCÉDÉ POUR LA QUALIFICATION D'UNE ERREUR POUR UNE MACHINE SYNCHRONE

(30) Priorität: 18.06.2015 DE 102015211255
(43) Veröffentlichungstag der Anmeldung: 25.04.2018
(73) Patentinhaber: Robert Bosch GmbH, 70442 Stuttgart (DE)
(72) Erfinder: UNGERMANN, Michael, 64285 Darmstadt (DE); LECHNER, Benjamin, 75242 Neuhausen (DE); ZIRKEL, Daniel, 75446 Wiernsheim-Serres (DE); RAICHLE, Daniel, 71665 Vaihingen (DE)
(86) Internationale Anmeldenummer: PCT/EP2016/063464
(87) Internationale Veröffentlichungsnummer: WO 2016/202727

(56) Entgegenhaltungen:
- EP-A2- 1 503 184
- DE-A1-102011 004 751
- DE-A1-102011 075 238
- DE-A1-102011 089 547
- US-A1- 2015 134 284

## Beschreibung

Die vorliegende Erfindung betrifft eine Steuerschaltung und Verfahren zum Qualifizieren eines Fehlers für eine Synchronmaschine, insbesondere eine permanenterregte Synchronmaschine oder eine elektrisch erregte Synchronmaschine.

### Stand der Technik

Zur Regelung von permanenterregten Synchronmaschinen und von elektrisch erregten Synchronmaschinen, wie sie beispielsweise in Hybrid- und Elektrofahrzeugen eingesetzt werden, ist die Kenntnis des Rotorlagewinkels nötig. Dieser wird auch kurz als Rotorwinkel bezeichnet und erhält das mathematische Symbol *ϕₑₗ* Zur Ermittlung des Rotorlagewinkels sind verschiedene Sensorarten bekannt, zum Beispiel digitale Winkelgeber, Resolver, oder Sensoren auf Basis des Wirbelstromeffekts.

Um die Funktion solcher Sensoren zu überwachen, werden üblicherweise Diagnosesignale erzeugt, wobei das Überschreiten einer vorbestimmten Diagnoseschwelle ein Auftreten eines Fehlers indiziert. Dabei kann es zu kurzzeitigen Ausreißern, das heißt tatsächlich irrelevanten Peaks in dem Diagnosesignal kommen. Um ein fälschliches Qualifizieren eines Fehlers zu vermeiden werden Diagnosesignale herkömmlicherweise zeitlich, das heißt zeitbasiert, entprellt. Bei der zeitbasierten Entprellung wird ein Fehler qualifiziert, also als tatsächlicher Fehler erkannt, wenn das Diagnosesignal ohne Unterbrechung oberhalb einer Diagnoseschwelle lag. Diagnosesignale werden auch Diagnosevergleichssignale genannt.

In der DE 10 2011 075 238 A1 sind ein Verfahren und eine Vorrichtung zum Überwachen einer Winkellage eines Rotors in einer Elektromaschine beschrieben. Die Winkellage kann wiederholt detektiert werden. In dem Fall, dass ein Differenzwert zwischen einer aktuell detektierten Winkellage und einer zuvor detektierten Winkellage größer ist als ein voreingestellter Grenzwert, wird ein Fehlersignal ausgegeben.

In der DE 10 2011 089 547 A1 sind ein Verfahren und eine Vorrichtung zum Korrigieren eines Messwertes eines Drehwinkels eines Rotors einer elektrischen Maschine beschrieben. Der gemessene Drehwinkel kann dabei um einen von dem Drehwinkel des Rotors abhängigen Korrekturwert, welcher in einer Korrekturtabelle hinterlegt ist, korrigiert werden.

In der EP 1004474 B1 sind ein Verfahren und eine Schaltungsanordnung zum Vergleich eines Eingangssignals mit unterschiedlichen Spannungsschwellen in einem elektronischen Blinkgeber beschrieben, wobei eine zeitliche Entprellung eines Ausgangssignals durchgeführt wird.

### Offenbarung der Erfindung

Die vorliegende Erfindung offenbart eine Steuerschaltung mit den Merkmalen des Patentanspruchs 1, eine Steuerschaltung mit den Merkmalen des Patentanspruchs 4, ein Verfahren mit den Merkmalen des Patentanspruchs 5 und ein Verfahren mit den Merkmalen des Patentanspruchs 8.

Unter einem Überschreiten einer Schwelle durch einen Wert soll insbesondere verstanden werden, dass der Wert größer als ein mit der Schwelle assoziierter Schwellwert ist. Unter dem Überschreiten der Schwelle kann aber auch verstanden werden, dass der Wert kleiner als der Schwellwert ist, je nachdem, ob die Schwelle als obere oder als untere Schwelle definiert ist.

Unter einem Qualifizieren oder Entprellen eines Fehlers soll insbesondere ein bestätigendes Beurteilen des Fehlers, d.h. ein Verifizieren eines durch ein Diagnosesignal indizierten Fehlers als ein tatsächlich aufgetretener Fehler zu verstehen sein.

Schließlich schafft die Erfindung auch eine Synchronmaschine mit einer erfindungsgemäßen Steuerschaltung.

### Vorteile der Erfindung

Die der vorliegenden Erfindung zu Grunde liegende Erkenntnis besteht darin, dass einige Fehler, welche bei Synchronmaschinen auftreten, nur an bestimmten Positionen des elektrischen Antriebs bzw. Rotors auftreten und sich in unterschiedlicher Art und Weise in den Diagnosesignalen äußern. Insbesondere gibt es auch Rotorpositionen des Rotors, bei denen sich ein bestimmter Fehler gar nicht in dem Diagnosesignal äußert. Umgekehrt lassen sich bestimmte Diagnosesignale nur einmal je elektrischer Periode ermitteln. In diesem Fall ist eine zeitbasierte Entprellung wirkungslos, da bereits ein einzelnes Überschreiten der Diagnoseschwelle durch das Diagnosesignal zum Qualifizieren des Fehlers führen kann - unabhängig von der applizierten Entprelldauer.

Die der vorliegenden Erfindung zu Grunde liegende Idee besteht nun darin, dieser Erkenntnis Rechnung zu tragen und eine Entprellung, das heißt eine Qualifizierung eines Fehlers, sowie basierend auf einer Überschreitung einer Diagnoseschwelle durch ein Diagnosesignal, basierend auf einem zurückgelegten Rotorwinkel vorzusehen.

Vorteilhafte Ausführungsformen und Weiterbildungen ergeben sich aus den Unteransprüchen sowie aus der Beschreibung unter Bezugnahme auf die Figuren.

Die Konstante, die von der Integriereinrichtung als Integrand verwendet wird, kann beispielsweise Eins sein.

Gemäß einer weiteren vorteilhaften Weiterbildung ist die Integriereinrichtung dazu konfiguriert, das Integral auf null zu setzen, sobald der Diagnosesignalwert die vorbestimmte Diagnoseschwelle nicht mehr überschreitet. Alternativ ist die Integriereinrichtung dazu konfiguriert, das Integral auf null zu setzen, sobald der Diagnosesignalwert die vorbestimmte Diagnoseschwelle über eine vorbestimmte Rotorlagewinkeldifferenz hinweg nicht überschritten hat. Somit ist auch eine Entprellung für das Signal zum Setzen des Integrals auf null vorgesehen.

Gemäß einer vorteilhaften Weiterbildung des erfindungsgemäßen Verfahren wird das Integral über den zurückgelegten Rotorlagewinkel innerhalb des mindestens einen Rotorlagewinkelintervalls mit Eins als Integranden berechnet.

Gemäß einer weiteren vorteilhaften Weiterbildung wird das Integral auf null gesetzt, sobald der Diagnosesignalwert die vorbestimmte Diagnoseschwelle nicht mehr überschreitet. Alternativ wird das Integral auf null gesetzt, sobald der Diagnosesignalwert die vorbestimmte Diagnoseschwelle über eine vorbestimmte Rotorlagewinkeldistanz hinweg nicht überschritten hat.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: ein schematisches Blockschaltbild einer beispielhaften Steuerschaltung 10 zum Qualifizieren eines Fehlers für eine Synchronmaschine;
- Fig. 2: ein schematisches Blockschaltbild einer Steuerschaltung 110 zum Qualifizieren eines Fehlers für eine Synchronmaschine gemäß einer Ausführungsform der vorliegenden Erfindung;
- Fig. 3: ein schematisches Blockschaltbild einer Steuerschaltung 210 zum Qualifizieren eines Fehlers für eine Synchronmaschine gemäß einer weiteren Ausführungsform der vorliegenden Erfindung;
- Fig. 4: ein schematisches Flussdiagramm zum Erläutern eines beispielhaften Verfahrens zum Qualifizieren eines Fehlers für eine Synchronmaschine;
- Fig. 5: ein schematisches Flussdiagramm zum Erläutern eines Verfahrens zum Qualifizieren eines Fehlers für eine Synchronmaschine gemäß noch einer weiteren Ausführungsform der vorliegenden Erfindung; und
- Fig. 6: ein schematisches Flussdiagramm zum Erläutern eines Verfahrens zum Qualifizieren eines Fehlers für eine Synchronmaschine gemäß einer weiteren Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

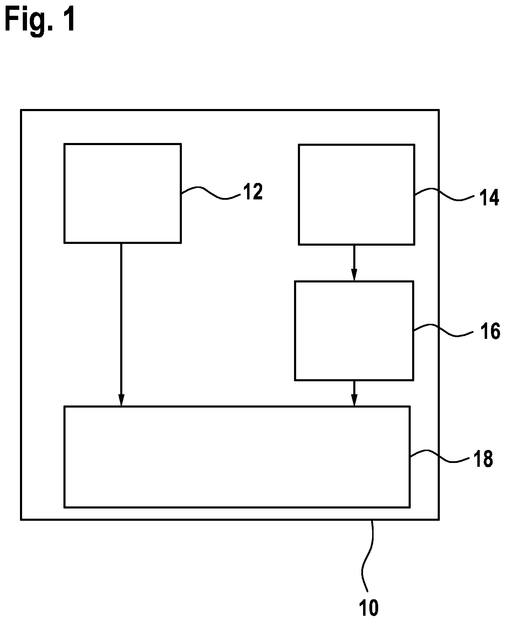

Fig. 1 zeigt ein schematisches Blockschaltbild einer beispielhaften Steuerschaltung 10 zum Qualifizieren eines Fehlers für eine Synchronmaschine.

Die Steuerschaltung 10 umfasst eine Rotorwinkelintervall-Ermittlungseinrichtung 12, welche dazu ausgebildet ist, mindestens ein durch einen Rotor der Synchronmaschine zurückgelegtes Rotorwinkelintervall zu ermitteln. Die Rotorwinkelintervall-Ermittlungseinrichtung kann beispielsweise auf digitalen Winkelgebern, Resolvern, oder Sensoren auf Basis des Wirbelstromeffekts basieren. Es kann jeweils ein aktueller Rotorlagewinkel ermittelt werden, wobei durch die Differenz zwischen zwei ermittelten Rotorlagewinkeln das zurückgelegte Rotorlagewinkelintervall ermittelt wird.

Die Steuerschaltung 10 umfasst außerdem eine Diagnosesignal-Ermittlungseinrichtung 14, welche dazu ausgebildet ist, mindestens einen Diagnosesignalwert eines Diagnosesignals, welches einen Fehler indiziert, zu ermitteln. Bei dem Fehler kann es sich beispielsweise um Resolversignale mit unplausiblem Amplitudenverhältnis handeln.

Die Steuerschaltung 10 umfasst weiterhin eine Vergleichseinrichtung 16, welche dazu ausgebildet ist, zu ermitteln, ob ein Überschreiten einer vorbestimmten Diagnoseschwelle durch den mindestens einen ermittelten Diagnosesignalwert oder einen von dem mindestens einen Diagnosesignalwert abgeleiteten Diagnosesignalwert vorliegt. Der abgeleitete Diagnosesignalwert kann beispielsweise ein Mittelwert oder ein Median mehrerer innerhalb eines Rotorlageintervalls ermittelter Diagnosesignalwerte sein. Die vorbestimmte Diagnoseschwelle kann in der Vergleichseinrichtung 16 oder in einer zusätzlichen Speichereinrichtung der Steuerschaltung 10 gespeichert sein.

Weiterhin umfasst die Steuerschaltung 10 eine Qualifizierungseinrichtung 18, welche dazu ausgebildet ist, den Fehler, welcher durch das Diagnosesignal indiziert wird, in Abhängigkeit von dem mindestens einen zurückgelegten Rotorwinkelintervall und von dem Überschreiten der vorbestimmten Diagnoseschwelle durch den Diagnosesignalwert oder den abgeleiteten Diagnosesignalwert zu qualifizieren.

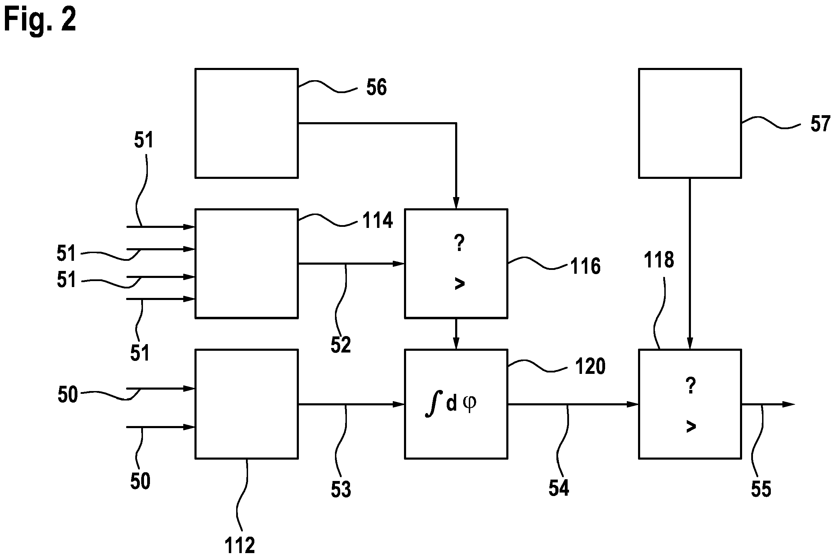

Fig. 2 zeigt ein schematisches Blockschaltbild einer Steuerschaltung 110 zum Qualifizieren eines Fehlers für eine Synchronmaschine gemäß weiteren Ausführungsform der vorliegenden Erfindung.

Die Steuerschaltung 110 ist eine Variante der Steuerschaltung 10 und unterscheidet sich von dieser insbesondere in der Konfiguration der Rotorlagewinkelintervall-Ermittlungseinrichtung 112 der Steuerschaltung 110, in der Konfiguration der Diagnosesignal-Ermittlungseinrichtung 114 der Steuerschaltung 110, in der Konfiguration der Vergleichseinrichtung 116 der Steuerschaltung 110, in der Konfiguration der Qualifizierungseinrichtung 118 der Steuerschaltung 110 und durch eine Integriereinrichtung 120 der Steuerschaltung 110.

Die Rotorlagewinkelintervall-Ermittlungseinrichtung 112 ist dazu ausgebildet, mindestens ein durch einen Rotor der Synchronmaschine zurückgelegtes Rotorlagewinkelintervall zu ermitteln und ein Rotorlagesignal 53 basierend auf dem ermittelten zurückgelegten Rotorlagewinkelintervall an eine Integriereinrichtung 120 der Steuerschaltung 110 zu übermitteln. Der Rotorlagewinkelintervall-Ermittlungseinrichtung 112 können dazu beispielsweise Ausgabesignale 50 eines Resolvers zugeführt werden, welche aktuelle Rotorlagewinkel des Rotors indizieren.

Die Diagnosesignal-Ermittlungseinrichtung 114 ist dazu ausgebildet ist, den Diagnosesignalwert des Diagnosesignals 52 kontinuierlich zu ermitteln, während der Rotor das mindestens eine Rotorwinkelintervall zurücklegt. Unter einem kontinuierlichen Ermitteln kann auch ein quasi-kontinuierliches, diskretes Ermitteln von Diagnosesignalwerten mit einer der Diagnosesignal-Ermittlungseinrichtung 114 maximal möglichen Ermittlungsfrequenz verstanden werden. Das Ermitteln des Diagnosesignalwerts des Diagnosesignals 52 basiert auf einem oder mehreren Eingangssignalen 51 der Diagnosesignal-Ermittlungseinrichtung 114. Das oder die Eingangssignale 51 sind von Sensoren der Synchronmaschine empfangbar.

Die Vergleichseinrichtung 116 ist dazu ausgebildet, kontinuierlich oder quasi-kontinuierlich zu ermitteln, ob ein Überschreiten einer vorbestimmten Diagnoseschwelle 56 durch den mindestens einen ermittelten Diagnosesignalwert des Diagnosesignal 52 oder einen von dem mindestens einen Diagnosesignalwert abgeleiteten Diagnosesignalwert vorliegt.

Die Integriereinrichtung 120 der Steuerschaltung 110 ist dazu ausgebildet, ein Integral über einen zurückgelegten Rotorwinkel innerhalb des mindestens einen Rotorwinkelintervalls mit einer Konstante, insbesondere Eins, als Integranden zu berechnen, solange, nach Maßgabe der Vergleichseinrichtung 116, der kontinuierlich ermittelte Diagnosesignalwert die vorbestimmte Diagnoseschwelle 56 überschreitet. Das berechnete Integral wird durch die Steuerschaltung 110 in einem Integralsignal 54 an die Qualifizierungseinrichtung 118 der Steuerschaltung 110 übermittelt. Bei der Berechnung des Integrals fungiert der zurückgelegte Rotorwinkel als Integrationsvariable.

Die als Integrand verwendete Konstante kann aus einer vorbestimmten Menge von Konstanten in Abhängigkeit von dem dem Diagnosesignalwert oder dem abgeleiteten Diagnosesignalwert im Verhältnis zu der vorbestimmten Diagnoseschwelle angepasst werden. Beispielsweise kann eine erste Konstante mit einem ersten Vorzeichen, beispielsweise einem positiven Vorzeichen, als Integrand verwendet werden, wenn der Diagnosesignalwert oder der abgeleitete Diagnosesignalwert größer als die, oder gleich der, Diagnoseschwelle ist. Eine zweite Konstante mit einem von dem ersten Vorzeichen veschiedenen Vorzeichen, beispielsweise einem negativen Vorzeichen, kann als Integrand verwendet werden, wenn der Diagnosesignalwert oder der abgeleitete Diagnosesignalwert kleiner als die die Diagnoseschwelle ist. Die erste und die zweite Konstante können den gleichen Betrag aufweisen oder verschieden voneinander sein. Somit kann der Wert des Integrals automatisch verringert werden, solange das Diagnosesignal keinen Fehler indiziert.

Die Qualifizierungseinrichtung 118 der Steuerschaltung 110 ist dazu ausgebildet, den Fehler zu qualifizieren, falls das berechnete Integral gemäß dem Integralsignal 54 einen vorbestimmten Wert 57 überschreitet. Dieser vorbestimmte Wert ist auch als Entprellschwelle bezeichenbar. Die Qualifizierungseinrichtung 118 ist weiterhin dazu ausgebildet, ein Fehlersignal 55 auszugeben, falls der vorbestimmte Wert 57 durch das berechnete Integral überschritten wird. Das Fehlersignal 55 kann beispielsweise zur Verarbeitung an eine Steuereinrichtung, zur Anzeige an eine Anzeigeeinrichtung oder zur Ausgabe an einen Lautsprecher übermittelt werden. Der vorbestimmte Wert 57 kann in der Qualifizierungseinrichtung oder in einer zusätzlichen Speichereinrichtung der Steuerschaltung 110 gespeichert sein.

Die Integriereinrichtung 120 kann dazu konfiguriert sein, das zu berechnende Integral auf null zu setzen, sobald der Diagnosesignalwert des Diagnosesignals 52 die vorbestimmte Diagnoseschwelle nicht mehr überschreitet.

Alternativ kann die Integriereinrichtung 120 dazu konfiguriert sein, das zu berechnende Integral auf null zu setzen, sobald der Diagnosesignalwert des Diagnosesignals 52 die vorbestimmte Diagnoseschwelle über eine vorbestimmte Rotorwinkeldifferenz und/oder über eine vorbestimmte Zeitdauer hinweg nicht überschritten hat. Die vorbestimmte Rotorwinkeldifferenz kann je nach zu bestimmendem Fehler der Synchronmaschine unterschiedlich bestimmt werden bzw. sein. Die vorbestimmte Rotorwinkeldifferenz kann in der Integriereinrichtung 120 oder in einer zusätzlichen Speichereinrichtung der Steuerschaltung 110 gespeichert sein.

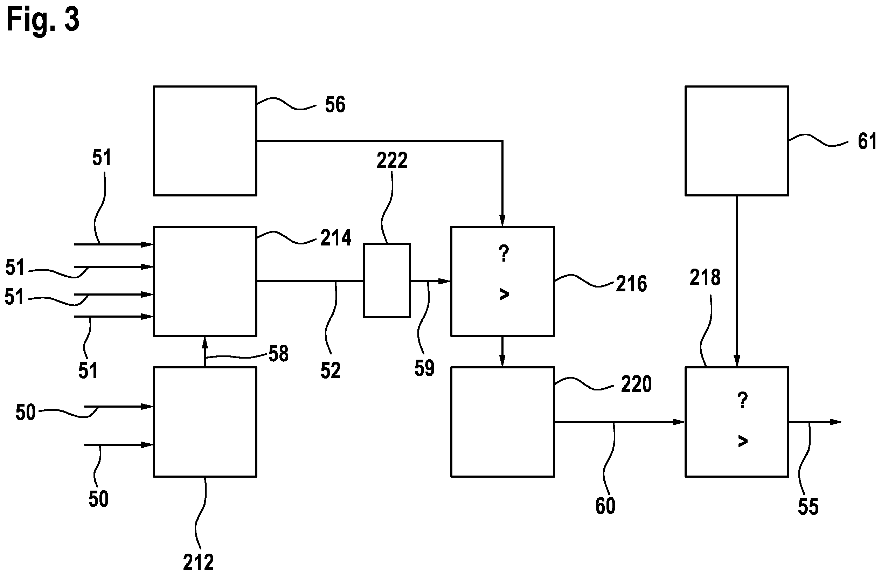

Fig. 3 zeigt ein schematisches Blockschaltbild einer Steuerschaltung 210 zum Qualifizieren eines Fehlers für eine Synchronmaschine gemäß noch einer weiteren Ausführungsform der vorliegenden Erfindung.

Die Steuerschaltung 210 ist eine Variante der Steuerschaltung 110 und unterscheidet sich von dieser insbesondere in der Konfiguration der Rotorlagewinkelintervall-Ermittlungseinrichtung 212 der Steuerschaltung 210, in der Konfiguration der Diagnosesignal-Ermittlungseinrichtung 214 der Steuerschaltung 210, in der Konfiguration der Vergleichseinrichtung 216 der Steuerschaltung 210, in der Konfiguration der Qualifizierungseinrichtung 218 der Steuerschaltung 210 und durch eine Recheneinrichtung 222 und eine Zähleinrichtung 220 der Steuerschaltung 210.

Die Diagnosesignal-Ermittlungseinrichtung 214 ist dazu ausgebildet, für jedes zurückgelegte Rotorlagewinkelintervall mindestens einen Diagnosesignalwert, insbesondere eine vorbestimmte Anzahl von Diagnosesignalwerten, des Diagnosesignals 52 zu ermitteln, wobei die zurückgelegten Rotorlagewinkelintervalle vorzugsweise gleich groß sind. Dies kann beispielsweise dadurch erreicht werden, dass eine Ermittlungsfrequenz, mit welcher die Diagnosesignal-Ermittlungseinrichtung 214 den Diagnosesignalwert des Diagnosesignals 52 ermittelt, an eine bekannte oder geschätzte Umdrehungszahl des Rotors angepasst wird. Alternativ oder zusätzlich kann durch die Rotorlagewinkelintervall-Ermittlungseinrichtung 212 ein Informationssignal 58 an die Diagnosesignal-Ermittlungseinrichtung 214 übermittelt werden, basierend auf welchem die Diagnosesignal-Ermittlungseinrichtung 214 den mindestens einen Diagnosesignalwert des Diagnosesignals 52, insbesondere die vorbestimmte Anzahl von Diagnosesignalwerten, ermittelt.

Die gleich großen Rotorlagewinkelintervalle können je nach einem zu qualifizierenden Fehler bestimmt werden und können von einem Bruchteil einer elektrischen Periode, welche einem Rotorlagewinkelintervall von dreihundertsechzig Grad entspricht, bis hin zu einem ganz- oder gebrochenzahligen Mehrfachen der elektrischen Periode der Synchronmaschine ausgewählt werden. Insbesondere werden die gleich großen Rotorlagewinkelintervalle so gewählt, dass der jeweilige Fehler, wenn er tatsächlich auftritt, pro Rotorlagewinkelintervall genau einmal oder mindestens einmal messbar ist.

Die Steuerschaltung 210 weist eine Recheneinrichtung 222 auf, welche dazu ausgebildet ist, basierend auf dem für das jeweilige zurückgelegte Rotorlagewinkelintervall ermittelten mindestens einen Diagnosesignalwert des Diagnosesignals 52 genau einen abgeleiteten Diagnosesignalwert für das jeweilige Rotorlagewinkelintervall zu erzeugen. Der abgeleitete Diagnosesignalwert kann gleich dem ermittelten Diagnosesignalwert sein, insbesondere wenn nur ein einzelner Diagnosesignalwert in einem konkreten Rotorlagewinkelintervall ermittelt wurde.

Die Recheneinrichtung 222 kann dazu ausgebildet sein, wenn mehrere Diagnosesignalwerte innerhalb eines konkreten Rotorlagewinkelintervalls ermittelt wurden, einen Mittelwert oder einen Median der ermittelten Diagnosesignalwerte als den abgeleiteten Diagnosesignalwert zu bestimmen. Der abgeleitete Diagnosesignalwert wird durch die Recheneinrichtung 222 in einem abgeleiteten Diagnosesignal 59 an die Vergleichseinrichtung 216 der Steuerschaltung 210 weitergeleitet.

Die Steuerschaltung 210 weist eine Zähleinrichtung 220 auf, welche dazu ausgebildet ist zu zählen, wie oft in Folge der abgeleitete Diagnosesignalwert des abgeleiteten Diagnosesignals 59 die vorbestimmte Diagnoseschwelle 56 überschreitet. Die Zahl der in Folge die vorbestimmte Diagnoseschwelle 56 überschreitenden abgeleiteten Diagnosesignalwerte wird durch die Zähleinrichtung 220 in einem Zählsignal 60 der Qualifizierungseinrichtung 218 der Steuerschaltung 210 übermittelt.

Die Qualifizierungseinrichtung 218 ist dazu ausgebildet, den Fehler zu qualifizieren, falls der abgeleitete Diagnosesignalwert, für eine vorbestimmte Anzahl 61 von Rotorlagewinkelintervallen in Folge, die vorbestimmte Diagnoseschwelle 56 überschreitet. Mit anderen Worten gibt die Qualifizierungseinrichtung 218 das Fehlersignal 55 aus, wenn abgeleitete Diagnosesignalwerte des abgeleiteten Diagnosesignalwerts 59 in der vorbestimmten Anzahl 61 in Folge die vorbestimmte Diagnoseschwelle 56 überschreiten. Die vorbestimmte Anzahl 61 kann in der Qualifizierungseinrichtung 218 oder in einer zusätzlichen Speichereinrichtung der Steuerschaltung 210 gespeichert sein.

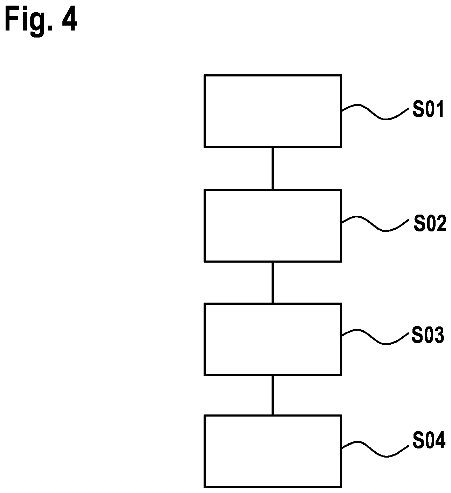

Fig. 4 zeigt ein schematisches Flussdiagramm zum Erläutern eines beispielhaften Verfahrens zum Qualifizieren eines Fehlers für eine Synchronmaschine.

Das Verfahren gemäß Fig. 4 ist zur Verwendung mit einer erfindungsgemäßen Steuerschaltung 110; 210 geeignet und kann vorteilhaft gemäß allen in Bezug auf die erfindungsgemäße Steuerschaltung beschriebenen Varianten und Weiterbildungen angepasst werden.

In einem Schritt S01 wird mindestens ein durch einen Rotor der Synchronmaschine zurückgelegtes Rotorlagewinkelintervall ermittelt, beispielsweise mittels der Rotorlagewinkelintervall-Ermittlungseinrichtung 12; 112; 212 der Steuerschaltung 10; 110; 210.

In einem Schritt S02 wird, während der Rotor die Rotorlagewinkeldistanz durchquert, mindestens einen Diagnosesignalwert eines Diagnosesignals 52, welches einen Fehler indiziert, ermittelt, beispielsweise mittels der Diagnosesignal-Ermittlungseinrichtung 14; 114; 214 der Steuerschaltung 10; 110; 210.

In einem Schritt S03 wird ermittelt, ob ein Überschreiten einer vorbestimmten Diagnoseschwelle 56 durch den mindestens einen ermittelten Diagnosesignalwert oder einen von dem mindestens einen Diagnosesignalwert abgeleiteten Diagnosesignalwert vorliegt.

In einem Schritt S04 wird der Fehler, welcher durch das Diagnosesignal indiziert wird, in Abhängigkeit von dem mindestens einen zurückgelegten Rotorlagewinkelintervall und von dem Überschreiten der vorbestimmten Diagnoseschwelle durch den Diagnosesignalwert oder den abgeleiteten Diagnosesignalwert qualifiziert.

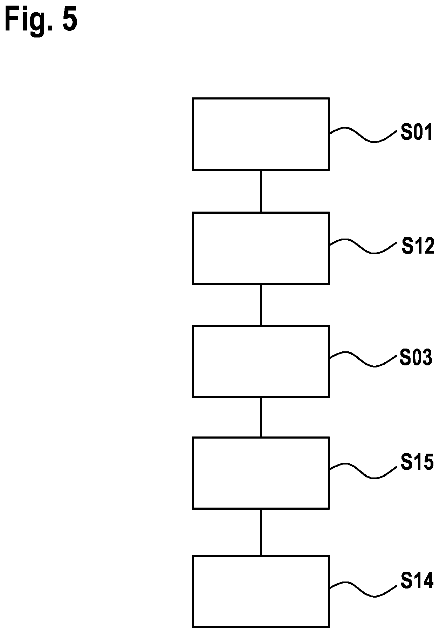

Fig. 5 zeigt ein schematisches Flussdiagramm zum Erläutern eines Verfahrens zum Qualifizieren eines Fehlers für eine Synchronmaschine gemäß noch einer weiteren Ausführungsform der vorliegenden Erfindung.

Das Verfahren gemäß Fig. 5 ist eine Variante des Verfahrens gemäß Fig. 4 und ist zur Verwendung mit einer erfindungsgemäßen Steuerschaltung 110 geeignet und kann vorteilhaft gemäß allen in Bezug auf die erfindungsgemäße Steuerschaltung 110 beschriebenen Varianten und Weiterbildungen angepasst werden.

Bei dem Verfahren gemäß Fig. 5 wird in einem Schritt S12 der Diagnosesignalwert, während der Rotor das mindestens eine Rotorlagewinkelintervall zurücklegt, kontinuierlich oder quasi-kontinuierlich ermittelt. In einem Schritt S15 wird ein Integral über einen zurückgelegten Rotorlagewinkel innerhalb des mindestens einen Rotorlagewinkelintervalls mit Eins als Integranden berechnet, solange der kontinuierlich ermittelte Diagnosesignalwert die vorbestimmte Diagnoseschwelle 56 überschreitet. In einem Schritt S14 wird der Fehler qualifiziert, falls das Integral einen vorbestimmten Wert 57 überschreitet. Das Setzen des Integrals auf null kann gemäß einer der in Bezug auf die Steuerschaltung 110 beschriebenen Alternativen erfolgen.

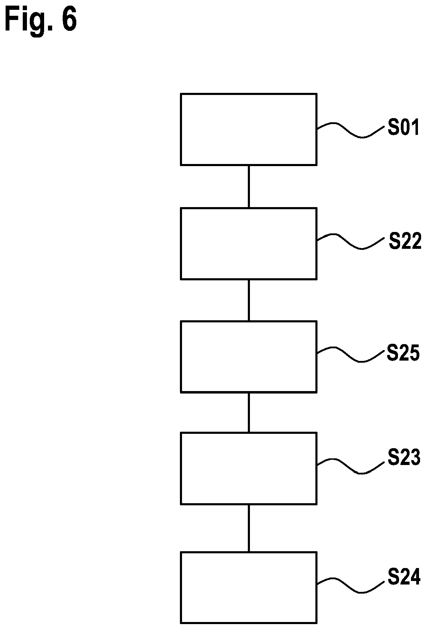

Fig. 6 zeigt ein schematisches Flussdiagramm zum Erläutern eines Verfahrens zum Qualifizieren eines Fehlers für eine Synchronmaschine gemäß einer weiteren Ausführungsform der vorliegenden Erfindung.

Das Verfahren gemäß Fig. 6 ist eine Variante des Verfahrens gemäß Fig. 4 und ist zur Verwendung mit einer erfindungsgemäßen Steuerschaltung 210 geeignet und kann vorteilhaft gemäß allen in Bezug auf die erfindungsgemäße Steuerschaltung 210 beschriebenen Varianten und Weiterbildungen angepasst werden.

In einem Schritt S22 wird für jedes zurückgelegte Rotorlagewinkelintervall mindestens ein Diagnosesignalwert des Diagnosesignals 52 ermittelt, wobei die zurückgelegten Rotorlagewinkelintervalle gleich groß sind. In einem Schritt S25 wird basierend auf dem für das jeweilige zurückgelegte Rotorlagewinkelintervall ermittelten mindestens einen Diagnosesignalwert ein abgeleiteter Diagnosesignalwert für das jeweilige Rotorlagewinkelintervall erzeugt. In einem Schritt S23 wird jeder abgeleitete Diagnosesignalwert mit der vorbestimmten Diagnoseschwelle 56 verglichen. In einem Schritt S24 wird der Fehler qualifiziert, falls der abgeleitete Diagnosesignalwert, für eine vorbestimmte Anzahl 61 von Rotorlagewinkelintervallen in Folge, die vorbestimmte Diagnoseschwelle 56 überschreitet

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann zusätzlich zu der erfindungsgemäßen Entprellung basierend auf dem zurückgelegten Rotorlagewinkelintervall eine zeitbasierte Entprellung vorgenommen werden, d.h. der Fehler muss, ehe das Fehlersignal durch die Steuerschaltung ausgegeben wird, ein weiteres Mal zeitbasiert qualifiziert werden.

## Patentansprüche

1. Steuerschaltung (110) zum Qualifizieren eines Fehlers für eine Synchronmaschine, mit:
einer Rotorlagewinkelintervall-Ermittlungseinrichtung (12; 112), welche dazu ausgebildet ist, mindestens ein durch einen Rotor der Synchronmaschine zurückgelegtes Rotorlagewinkelintervall zu ermitteln;
einer Diagnosesignal-Ermittlungseinrichtung (14; 114), welche dazu ausgebildet ist, mindestens einen Diagnosesignalwert eines Diagnosesignals, welches einen Fehler indiziert, zu ermitteln;
einer Vergleichseinrichtung (116), welche dazu ausgebildet ist, zu ermitteln, ob ein Überschreiten einer vorbestimmten Diagnoseschwelle (56) durch den mindestens einen ermittelten Diagnosesignalwert oder einen von dem mindestens einen Diagnosesignalwert abgeleiteten Diagnosesignalwert vorliegt; und
einer Qualifizierungseinrichtung (118), welche dazu ausgebildet ist, den Fehler, welcher durch das Diagnosesignal indiziert wird, in Abhängigkeit von dem mindestens einen zurückgelegten Rotorlagewinkelintervall und von dem Überschreiten der vorbestimmten Diagnoseschwelle (56) durch den Diagnosesignalwert oder den abgeleiteten Diagnosesignalwert zu qualifizieren;
wobei die Diagnosesignal-Ermittlungseinrichtung (114) dazu ausgebildet ist, den Diagnosesignalwert, während der Rotor das mindestens eine Rotorlagewinkelintervall zurücklegt, kontinuierlich zu ermitteln;
wobei die Steuerschaltung (110) eine Integriereinrichtung (120) aufweist, welche dazu ausgebildet ist, ein Integral über einen zurückgelegten Rotorlagewinkel innerhalb des mindestens einen Rotorlagewinkelintervalls mit einer Konstante als Integranden zu berechnen, solange der kontinuierlich ermittelte Diagnosesignalwert die vorbestimmte Diagnoseschwelle (56) überschreitet; und
wobei die Qualifizierungseinrichtung (118) dazu ausgebildet ist, den Fehler zu qualifizieren, falls das Integral einen vorbestimmten Wert (57) überschreitet.

2. Steuerschaltung (110) nach Anspruch 1,
wobei die Integriereinrichtung (120) dazu konfiguriert ist, das Integral auf null zu setzen, sobald der Diagnosesignalwert die vorbestimmte Diagnoseschwelle (56) nicht mehr überschreitet.

3. Steuerschaltung (110) nach Anspruch 1,
wobei die Integriereinrichtung (120) dazu konfiguriert ist, das Integral auf null zu setzen, sobald der Diagnosesignalwert die vorbestimmte Diagnoseschwelle (56) über eine vorbestimmte Rotorlagewinkeldifferenz hinweg nicht überschritten hat.

4. Steuerschaltung (210) zum Qualifizieren eines Fehlers für eine Synchronmaschine, mit:
einer Rotorlagewinkelintervall-Ermittlungseinrichtung (212), welche dazu ausgebildet ist, mindestens ein durch einen Rotor der Synchronmaschine zurückgelegtes Rotorlagewinkelintervall zu ermitteln;
einer Diagnosesignal-Ermittlungseinrichtung (214), welche dazu ausgebildet ist, mindestens einen Diagnosesignalwert eines Diagnosesignals, welches einen Fehler indiziert, zu ermitteln;
einer Vergleichseinrichtung (216), welche dazu ausgebildet ist, zu ermitteln, ob ein Überschreiten einer vorbestimmten Diagnoseschwelle (56) durch den mindestens einen ermittelten Diagnosesignalwert oder einen von dem mindestens einen Diagnosesignalwert abgeleiteten Diagnosesignalwert vorliegt; und
einer Qualifizierungseinrichtung (218), welche dazu ausgebildet ist, den Fehler, welcher durch das Diagnosesignal indiziert wird, in Abhängigkeit von dem mindestens einen zurückgelegten Rotorlagewinkelintervall und von dem Überschreiten der vorbestimmten Diagnoseschwelle (56) durch den Diagnosesignalwert oder den abgeleiteten Diagnosesignalwert zu qualifizieren,
wobei die Diagnosesignal-Ermittlungseinrichtung (214) dazu ausgebildet ist, für jedes zurückgelegte Rotorlagewinkelintervall mindestens einen Diagnosesignalwert des Diagnosesignals (52) zu ermitteln; wobei die zurückgelegten Rotorlagewinkelintervalle gleich groß sind;
wobei die Steuerschaltung (210) eine Recheneinrichtung (222) aufweist, welche dazu ausgebildet ist, basierend auf dem für das jeweilige zurückgelegte Rotorlagewinkelintervall ermittelten mindestens einen Diagnosesignalwert einen abgeleiteten Diagnosesignalwert für das jeweilige Rotorlagewinkelintervall zu erzeugen;
wobei die Qualifizierungseinrichtung (218) dazu ausgebildet ist, den Fehler zu qualifizieren, falls der abgeleitete Diagnosesignalwert, für eine vorbestimmte Anzahl (61) von Rotorlagewinkelintervallen in Folge, die vorbestimmte Diagnoseschwelle (56) überschreitet.

5. Verfahren zum Qualifizieren eines Fehlers für eine Synchronmaschine mit den Schritten:
Ermitteln (S01) mindestens eines durch einen Rotor der Synchronmaschine zurückgelegten Rotorlagewinkelintervalls;
Ermitteln (S02), während der Rotor die Rotorlagewinkeldistanz durchquert, mindestens eines Diagnosesignalwerts eines Diagnosesignals, welches einen Fehler indiziert;
Ermitteln (S03), ob ein Überschreiten einer vorbestimmten Diagnoseschwelle (56) durch den mindestens einen ermittelten Diagnosesignalwert oder einen von dem mindestens einen Diagnosesignalwert abgeleiteten Diagnosesignalwert vorliegt; und
Qualifizieren (S04) des Fehlers, welcher durch das Diagnosesignal indiziert wird, in Abhängigkeit von dem mindestens einen zurückgelegten Rotorlagewinkelintervall und von dem Überschreiten der vorbestimmten Diagnoseschwelle (56) durch den Diagnosesignalwert oder den abgeleiteten Diagnosesignalwert,
wobei der Diagnosesignalwert, während der Rotor das mindestens eine Rotorlagewinkelintervall zurücklegt, kontinuierlich ermittelt wird;
wobei ein Integral über einen zurückgelegten Rotorlagewinkel innerhalb des mindestens einen Rotorlagewinkelintervalls mit einer Konstante als Integranden berechnet wird, solange der kontinuierlich ermittelte Diagnosesignalwert die vorbestimmte Diagnoseschwelle (56) überschreitet; und
wobei der Fehler qualifiziert wird, falls das Integral einen vorbestimmten Wert (57) überschreitet.

6. Verfahren nach Anspruch 5,
wobei das Integral auf null gesetzt wird, sobald der Diagnosesignalwert die vorbestimmte Diagnoseschwelle (56) nicht mehr überschreitet.

7. Verfahren nach Anspruch 5,
wobei das Integral auf null gesetzt wird, sobald der Diagnosesignalwert die vorbestimmte Diagnoseschwelle (56) über eine vorbestimmte Rotorlagewinkeldistanz hinweg nicht überschritten hat.

8. Verfahren zum Qualifizieren eines Fehlers für eine Synchronmaschine mit den Schritten:
Ermitteln (S01) mindestens eines durch einen Rotor der Synchronmaschine zurückgelegten Rotorlagewinkelintervalls;
Ermitteln (S02), während der Rotor die Rotorlagewinkeldistanz durchquert, mindestens eines Diagnosesignalwerts eines Diagnosesignals, welches einen Fehler indiziert;
Ermitteln (S03), ob ein Überschreiten einer vorbestimmten Diagnoseschwelle (56) durch den mindestens einen ermittelten Diagnosesignalwert oder einen von dem mindestens einen Diagnosesignalwert abgeleiteten Diagnosesignalwert vorliegt; und
Qualifizieren (S04) des Fehlers, welcher durch das Diagnosesignal indiziert wird, in Abhängigkeit von dem mindestens einen zurückgelegten Rotorlagewinkelintervall und von dem Überschreiten der vorbestimmten Diagnoseschwelle (56) durch den Diagnosesignalwert oder den abgeleiteten Diagnosesignalwert,
wobei für jedes zurückgelegte Rotorlagewinkelintervall mindestens ein Diagnosesignalwert des Diagnosesignals (52) ermittelt wird (S22); wobei die zurückgelegten Rotorlagewinkelintervalle gleich groß sind;
wobei basierend auf dem für das jeweilige zurückgelegte Rotorlagewinkelintervall ermittelten mindestens einen Diagnosesignalwert ein abgeleiteter Diagnosesignalwert für das jeweilige Rotorlagewinkelintervall erzeugt wird (S25);
wobei der Fehler qualifiziert wird (S24), falls der abgeleitete Diagnosesignalwert, für eine vorbestimmte Anzahl (61) von Rotorlagewinkelintervallen in Folge, die vorbestimmte Diagnoseschwelle (56) überschreitet.

## Claims

1. Control circuit (110) for qualifying a fault for a synchronous machine, comprising:
a rotor position angle range determination device (12; 112) which is designed to determine at least one rotor position angle range which is covered by a rotor of the synchronous machine;
a diagnostic signal determination device (14; 114) which is designed to determine at least one diagnostic signal value of a diagnostic signal which indicates a fault;
a comparison device (116) which is designed to determine whether a predetermined diagnostic threshold (56) is exceeded by the at least one determined diagnostic signal value or a diagnostic signal value which is derived from the at least one diagnostic signal value; and
a qualification device (118) which is designed to qualify the fault, which is indicated by the diagnostic signal, on the basis of the at least one covered rotor position angle range and the situation of the predetermined diagnostic threshold (56) being exceeded by the diagnostic signal value or the derived diagnostic signal value;
wherein the diagnostic signal determination device (114) is designed to continuously determine the diagnostic signal value while the rotor covers the at least one rotor position angle range;
wherein the control circuit (110) has an integration device (120) which is designed to calculate an integral over a covered rotor position angle within the at least one rotor position angle range with a constant as integrand for as long as the continuously determined diagnostic signal value exceeds the predetermined diagnostic threshold (56); and
wherein the qualification device (118) is designed to qualify the fault if the integral exceeds a predetermined value (57).

2. Control circuit (110) according to Claim 1, wherein the integration device (120) is configured to set the integral to zero as soon as the diagnostic signal value no longer exceeds the predetermined diagnostic threshold (56).

3. Control circuit (110) according to Claim 1, wherein the integration device (120) is configured to set the integral to zero as soon as the diagnostic signal value has not exceeded the predetermined diagnostic threshold (56) over a predetermined rotor position angle difference.

4. Control circuit (210) for qualifying a fault for a synchronous machine, comprising:
a rotor position angle range determination device (212) which is designed to determine at least one rotor position angle range which is covered by a rotor of the synchronous machine;
a diagnostic signal determination device (214) which is designed to determine at least one diagnostic signal value of a diagnostic signal which indicates a fault;
a comparison device (216) which is designed to determine whether a predetermined diagnostic threshold (56) is exceeded by the at least one determined diagnostic signal value or a diagnostic signal value which is derived from the at least one diagnostic signal value; and
a qualification device (218) which is designed to qualify the fault, which is indicated by the diagnostic signal, on the basis of the at least one covered rotor position angle range and the situation of the predetermined diagnostic threshold (56) being exceeded by the diagnostic signal value or the derived diagnostic signal value;
wherein the diagnostic signal determination device (214) is designed to determine at least one diagnostic signal value of the diagnostic signal (52) for each covered rotor position angle range; wherein the covered rotor position angle ranges are of the same size;
wherein the control circuit (210) has a computation device (222) which is designed to generate a derived diagnostic signal value for the respective rotor position angle range based on the at least one diagnostic signal value which is determined for the respective covered rotor position angle range;
wherein the qualification device (218) is designed to qualify the fault if the derived diagnostic signal value, for a predetermined number (61) of the rotor position angle ranges in order, exceeds the predetermined diagnostic threshold (56).

5. Method for qualifying a fault for a synchronous machine, comprising the steps of:
determining (S01) at least one rotor position angle range which is covered by a rotor of the synchronous machine;
determining (S02), while the rotor crosses the rotor position angle distance, at least one diagnostic signal value of a diagnostic signal which indicates a fault;
determining (S03) whether a predetermined diagnostic threshold (56) is exceeded by the at least one determined diagnostic signal value or a diagnostic signal value which is derived from the at least one diagnostic signal value; and
qualifying (S04) the fault, which is indicated by the diagnostic signal, on the basis of the at least one covered rotor position angle range and the situation of the predetermined diagnostic threshold (56) being exceeded by the diagnostic signal value or the derived diagnostic signal value,
wherein the diagnostic signal value is continuously determined while the rotor covers the at least one rotor position angle range;
wherein an integral over a covered rotor position angle within the at least one rotor position angle range with a constant as integrand is calculated for as long as the continuously determined diagnostic signal value exceeds the predetermined diagnostic threshold (56); and
wherein the fault is qualified if the integral exceeds a predetermined value (57).

6. Method according to Claim 5,
wherein the integral is set to zero as soon as the diagnostic signal value no longer exceeds the predetermined diagnostic threshold (56).

7. Method according to Claim 5,
wherein the integral is set to zero as soon as the diagnostic signal value has not exceeded the predetermined diagnostic threshold (56) over a predetermined rotor position angle distance.

8. Method for qualifying a fault for a synchronous machine, comprising the steps of:
determining (S01) at least one rotor position angle range which is covered by a rotor of the synchronous machine;
determining (S02), while the rotor crosses the rotor position angle distance, at least one diagnostic signal value of a diagnostic signal which indicates a fault;
determining (S03) whether a predetermined diagnostic threshold (56) is exceeded by the at least one determined diagnostic signal value or a diagnostic signal value which is derived from the at least one diagnostic signal value; and
qualifying (S04) the fault, which is indicated by the diagnostic signal, on the basis of the at least one covered rotor position angle range and the situation of the predetermined diagnostic threshold (56) being exceeded by the diagnostic signal value or the derived diagnostic signal value;
wherein at least one diagnostic signal value of the diagnostic signal (52) is determined (S22) for each covered rotor position angle range; wherein the covered rotor position angle ranges are of the same size;
wherein a derived diagnostic signal value for the respective rotor position angle range is generated (S25) based on the at least one diagnostic signal value which is determined for the respective covered rotor position angle range;
wherein the fault is qualified (S24) if the derived diagnostic signal value, for a predetermined number (61) of rotor position angle ranges in order, exceeds the predetermined diagnostic threshold (56).

## Revendications

1. Circuit de commande (110) pour la qualification d'une erreur pour une machine synchrone, comprenant :
un dispositif de détermination d'intervalle d'angle de position de rotor (12 ; 112) qui est réalisé pour déterminer au moins un intervalle d'angle de position de rotor parcouru par un rotor de la machine synchrone ;
un dispositif de détermination de signal de diagnostic (14 ; 114) qui est réalisé pour déterminer au moins une valeur de signal de diagnostic d'un signal de diagnostic qui indique une erreur ;
un dispositif de comparaison (116) qui est réalisé pour déterminer s'il existe un dépassement d'un seuil de diagnostic prédéterminé (56) par ladite au moins une valeur de signal de diagnostic déterminée ou une valeur de signal de diagnostic dérivée de ladite au moins une valeur de signal de diagnostic ; et
un dispositif de qualification (118) qui est réalisé pour qualifier l'erreur qui est indiquée par le signal de diagnostic en fonction dudit au moins un intervalle d'angle de position de rotor parcouru et du dépassement du seuil de diagnostic prédéterminé (56) par la valeur de signal de diagnostic ou la valeur de signal de diagnostic dérivée ;
dans lequel le dispositif de détermination de signal de diagnostic (114) est réalisé pour déterminer en continu la valeur de signal de diagnostic pendant que le rotor parcourt ledit au moins un intervalle d'angle de position de rotor ;
le circuit de commande (110) présentant un dispositif d'intégration (120) qui est réalisé pour calculer une intégrale par rapport à un angle de position de rotor parcouru à l'intérieur dudit au moins un intervalle d'angle de position de rotor avec une constante comme fonction à intégrer tant que la valeur de signal de diagnostic déterminée en continu dépasse le seuil de diagnostic prédéterminé (56) ; et
dans lequel le dispositif de qualification (118) est réalisé pour qualifier l'erreur si l'intégrale dépasse une valeur prédéterminée (57).

2. Circuit de commande (110) selon la revendication 1, dans lequel le dispositif d'intégration (120) est configuré pour mettre l'intégrale à zéro dès que la valeur de signal de diagnostic ne dépasse plus le seuil de diagnostic prédéterminé (56).

3. Circuit de commande (110) selon la revendication 1, dans lequel le dispositif d'intégration (120) est configuré pour mettre l'intégrale à zéro dès que la valeur de signal de diagnostic n'a pas dépassé le seuil de diagnostic prédéterminé (56) au-delà d'une différence d'angle de position de rotor prédéterminée.

4. Circuit de commande (210) pour la qualification d'une erreur pour une machine synchrone, comprenant :
un dispositif de détermination d'intervalle d'angle de position de rotor (212) qui est réalisé pour déterminer au moins un intervalle d'angle de position de rotor parcouru par un rotor de la machine synchrone ;
un dispositif de détermination de signal de diagnostic (214) qui est réalisé pour déterminer au moins une valeur de signal de diagnostic d'un signal de diagnostic qui indique une erreur ;
un dispositif de comparaison (216) qui est réalisé pour déterminer s'il existe un dépassement d'un seuil de diagnostic prédéterminé (56) par ladite au moins une valeur de signal de diagnostic déterminée ou une valeur de signal de diagnostic dérivée de ladite au moins une valeur de signal de diagnostic ; et
un dispositif de qualification (218) qui est réalisé pour qualifier l'erreur qui est indiquée par le signal de diagnostic en fonction dudit au moins un intervalle d'angle de position de rotor parcouru et du dépassement du seuil de diagnostic prédéterminé (56) par la valeur de signal de diagnostic ou la valeur de signal de diagnostic dérivée, le dispositif de détermination de signal de diagnostic (214) étant réalisé pour déterminer pour chaque intervalle d'angle de position de rotor parcouru au moins une valeur de signal de diagnostic du signal de diagnostic (52) ; dans lequel les intervalles d'angle de position de rotor parcouru sont égaux ; dans lequel le circuit de commande (210) présente un dispositif de calcul (222) qui est réalisé pour générer une valeur de signal de diagnostic dérivée pour l'intervalle d'angle de position de rotor respectif, sur la base de ladite au moins une valeur de signal de diagnostic déterminée pour l'intervalle d'angle de position de rotor parcouru respectif ;
dans lequel le dispositif de qualification (218) est réalisé pour qualifier l'erreur si la valeur de signal de diagnostic dérivée dépasse le seuil de diagnostic prédéterminé (56) pour un nombre prédéterminé (61) d'intervalles d'angle de position de rotor consécutifs.

5. Procédé pour la qualification d'une erreur pour une machine synchrone, comprenant les étapes consistant à :
déterminer (S01) au moins un intervalle d'angle de position de rotor parcouru par un rotor de la machine synchrone ;
déterminer (S02), pendant que le rotor franchit la distance d'angle de position de rotor, au moins une valeur de signal de diagnostic d'un signal de diagnostic qui indique une erreur ;
déterminer (S03) s'il existe un dépassement d'un seuil de diagnostic prédéterminé (56) par ladite au moins une valeur de signal de diagnostic déterminée ou une valeur de signal de diagnostic dérivée de ladite au moins une valeur de signal de diagnostic ; et
qualifier (S04) l'erreur qui est indiquée par le signal de diagnostic en fonction dudit au moins un intervalle d'angle de position de rotor parcouru et du dépassement du seuil de diagnostic prédéterminé (56) par la valeur de signal de diagnostic ou la valeur de signal de diagnostic dérivée,
dans lequel la valeur de signal de diagnostic est déterminée en continu pendant que le rotor parcourt ledit au moins un intervalle d'angle de position de rotor ;
dans lequel une intégrale par rapport à un angle de position de rotor parcouru à l'intérieur dudit au moins un intervalle d'angle de position de rotor est calculée avec une constante comme fonction à intégrer, tant que la valeur de signal de diagnostic déterminée en continu dépasse le seuil de diagnostic prédéterminé (56) ; et
dans lequel l'erreur est qualifiée si l'intégrale dépasse une valeur prédéterminée (57).

6. Procédé selon la revendication 5, dans lequel l'intégrale est mise à zéro dès que la valeur de signal de diagnostic ne dépasse plus le seuil de diagnostic prédéterminé (56).

7. Procédé selon la revendication 5, dans lequel l'intégrale est mise à zéro dès que la valeur de signal de diagnostic n'a pas dépassé le seuil de diagnostic prédéterminé (56) sur une distance d'angle de position de rotor prédéterminée.

8. Procédé pour la qualification d'une erreur pour une machine synchrone, comprenant les étapes consistant à :
déterminer (S01) au moins un intervalle d'angle de position de rotor parcouru par un rotor de la machine synchrone ;
déterminer (S02), pendant que le rotor franchit la distance d'angle de position de rotor, au moins une valeur de signal de diagnostic d'un signal de diagnostic qui indique une erreur ;
déterminer (S03) s'il existe un dépassement d'un seuil de diagnostic prédéterminé (56) par ladite au moins une valeur de signal de diagnostic déterminée ou une valeur de signal de diagnostic dérivée de ladite au moins une valeur de signal de diagnostic ; et
qualifier (S04) l'erreur qui est indiquée par le signal de diagnostic en fonction dudit au moins un intervalle d'angle de position de rotor parcouru et du dépassement du seuil de diagnostic prédéterminé (56) par la valeur de signal de diagnostic ou la valeur de signal de diagnostic dérivée,
dans lequel une valeur de signal de diagnostic du signal de diagnostic (52) est déterminée (S22) pour chaque intervalle d'angle de position de rotor ; les intervalles d'angle de position de rotor parcourus étant identiques ;
dans lequel une valeur de signal de diagnostic dérivée est générée (S25) pour l'intervalle d'angle de position de rotor respectif, sur la base de ladite au moins une valeur de signal de diagnostic déterminée pour l'intervalle d'angle de position de rotor parcouru respectif ;
dans lequel l'erreur est qualifiée (S24) si la valeur de signal de diagnostic dérivée dépasse le seuil de diagnostic prédéterminé (56) pour un nombre prédéterminé (61) d'intervalles d'angle de position de rotor consécutifs.
